# EUROPEAN PATENT SPECIFICATION

(11) **EP 1 903 720 B1**
(45) Date of publication and mention of the grant of the patent: **14.10.2009**
(21) Application number: 07124188.9
(22) Date of filing: 21.01.2005
(51) Int. Cl.: H04W 76/04, H04L 12/12

(54) **Multiple IEEE 802.11 Delivery Traffic Indication Message Periods**
Mehrere IEEE-802.11-Zustellungsbenachrichtigungsperioden (DTIM)
Périodes de messages d'indication du trafic de livraison IEEE 802.11 multiple

(43) Date of publication of application: 26.03.2008
(62) Divisional of application: 05100367.1
(73) Proprietor: Research In Motion Limited, Waterloo, Ontario N2L 3W8 (CA)
(72) Inventor: Nagy, Tom, Waterloo Ontario N2L 2N4 (CA); Wang, James, Richmond Hill Ontario L4C 9H3 (CA)
(74) Representative: Moore, Barry

(56) References cited:
- EP-A- 1 206 070
- EP-A- 1 237 334
- US-A1- 2004 072 559
- IEEE: "Part 11: Wireless LAN Medium Access Control (MAC) and Physical Layer (PHY) Specifications" ANSI/IEEE 802.11, 1999 EDITION (R2003), 12 June 2003 (2003-06-12), page I-8,34-58,98-137,469-474, XP002332266
- IEEE: "Part 11: Wireless LAN Medium Access Control (MAC) and Physical Layer (PHY) specifications: Higher-Speed Physical Layer Extension in the 2.4GHz Band" IEEE STD 802.11B-1999, 16 September 1999 (1999-09-16), page I,89, XP002332267
- ETSI: "Broadband Radio Access Networks (BRAN); HIPERLAN Type 2; Data Link Control (DLC) Layer; Part 2: Radio Link Control (RLC) sublayer" ETSI TS 101 761-2 V1.3.1, January 2002 (2002-01), page 1-13,92-97, XP002332268

## Description

The invention generally relates to wireless networks. In particular, embodiments of the invention relate to power saving for one or more client devices in a wireless network.

A wireless access point (AP) is a device that "connects" wireless devices together to create a wireless network. The wireless devices, also known as "client devices", communicate with each other or with other networks through the AP.

A client device may, or may not, be battery-powered. For example, a client device, such as a wireless-enabled laptop, a wireless-enabled cellphone, a wireless-enabled personal digital assistant (PDA), and the like, may sometimes be battery-powered, and at other times may receive power from an external source, such as a power outlet. Other client devices, such as a desktop computer, may receive power from an external source, such as a power outlet, and may not have the option to be battery-powered.

The IEEE 802.11 standard (including IEEE 802.11b) provides a medium access control "MAC" and physical layer "PHY" specification for wireless connectivity for fixed, portable, and moving stations within a local area. Annex F of the IEEE 802.11b standard defines a virtual dual access point (AP) as two logically separate APs that exist within a single physical AP with a single radio. Both logical APs send out their own beacons, DTIMs, and other nondirected packets.

EP1206070 relates to the IEEE 802.11 standard and discloses a method for optimization of wireless LAN "WLAN" parameters, and to a method of dynamic channel changing within the IEEE 802.11 standard.

EP1237334 relates to the IEEE 802.11 standard and discloses a method of providing Quality of Service (QoS) in a wireless LAN system.

ETSI technical specification TS 101 761-2, version 1.3.1 "Broadband Radio Access Networks" is a specification that addresses the physical layer "PHY" as well as the data link control "DLC" layer interworking that allows broadband radio systems to interface to existing wired networks.

US2004/0072559 discloses a radio terminal and a radio communication system which enables power saving. An intermittent receiving interval for each radio terminal is set according to the operation mode of each application running on the radio terminal. Consequently, the intermittent receiving interval can be changed in cooperation with the operation mode of each application. Thus, power-saving control for the radio terminal can be carried out precisely.

ETSI technical specification TS 101 761-1, version V1.3.1 "Broadband Radio Access Networks" is a specification that describes the first phase of the basic data transport mechanism of the Data Link Control layer of the HIPERLAN/2 system.

It may be beneficial to enhance the battery lifetime of battery-powered client devices.

### GENERAL

The present invention provides a method as specified in claim 1, an access point as specified in claim 8, a system as specified in claim 10 and a machine readable medium as specified in claim 11.

Other aspects of the present invention will be apparent from the appended claims.

### BRIEF DESCRIPTION OF THE DRAWINGS

Embodiments of the invention are illustrated by way of example and not limitation in the figures of the accompanying drawings, in which like reference numerals indicate corresponding, analogous or similar elements, and in which:

FIG. 1 is an illustration of an exemplary communications system, according to some embodiments of the invention;

FIG. 2 is an illustration of an exemplary sequence of beacon frames, helpful in understanding some embodiments of the invention;

FIG. 3 is a block diagram of an exemplary access point, according to an embodiment of the invention; and

FIG. 4 is a block diagram of an exemplary wireless client device, according to an embodiment of the invention.

It will be appreciated that for simplicity and clarity of illustration, elements shown in the figures have not necessarily been drawn to scale. For example, the dimensions of some of the elements may be exaggerated relative to other elements for clarity.

### DESCRIPTION OF PREFERRED EMBODIMENTS

In the following detailed description, numerous specific details are set forth in order to provide a thorough understanding of embodiments of the invention. However it will be understood by those of ordinary skill in the art that the embodiments of the invention may be practiced without these specific details. In other instances, well-known methods, procedures, components and circuits have not been described in detail so as not to obscure the embodiments of the invention.

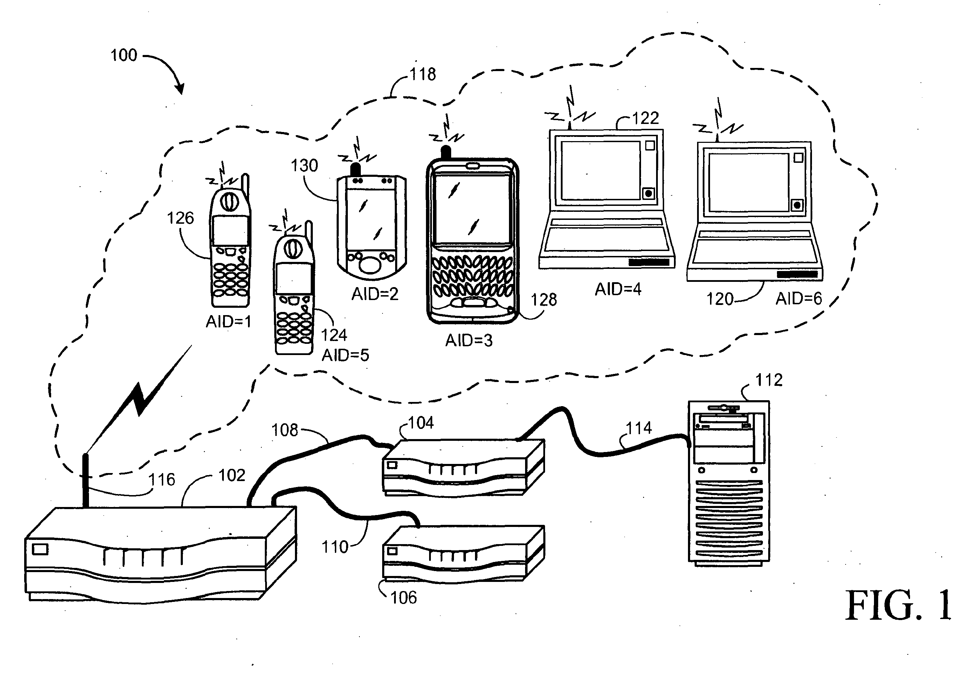

Figure 1 is an illustration of an exemplary communications system 100 according to embodiments of the invention. System 100 includes a wireless access point (AP) 102 and network gateways 104 and 106 coupled to AP 102 via wired connections 108 and 110, respectively. Network gateways 104 and 106, wired connections 108 and 110 may all be part of a "distribution system" for AP 102. Non-limiting examples for network gateways 104 and 106 are cable modems, Asymmetric Digital Subscriber Line (ADSL) modems, Asynchronous Transfer Mode (ATM) network gateways, dial-up modems, satellite modems, Integrated Services Digital Network (ISDN) gateways, T-carrier 1 (T1) modems, and the like. It is obvious that any other configuration of a distribution system for AP 102 is possible. System 100 also includes a desktop computer or server 112 coupled to gateway 104 via a wired connection 114.

AP 102 has at least one antenna 116 and is configurable to support at least one wireless network name, for example, at least one service set identifier (SSID). A non-exhaustive list of examples for antenna 116 includes a dipole antenna, a monopole antenna, a multilayer ceramic antenna, a planar inverted-F antenna, a loop antenna, a slot antenna, a dual antenna, an omnidirectional antenna and any other suitable antenna. AP 102 may include a router.

Exemplary communications system 100 includes wireless-enabled laptops 120 and 122, wireless-enabled cellphones 124 and 126 and wireless-enabled personal digital assistants (PDAs) 128 and 130. Each of wireless-enabled laptops 120 and 122, wireless-enabled cellphones 124 and 126 and wireless-enabled PDAs 128 and 130 is able to execute an initialization process to associate themselves in a wireless network with AP 102.

For example, wireless-enabled laptops 120 and 122, wireless-enabled cellphones 124 and 126 and wireless-enabled PDAs 128 and 130 may become associated with AP 102 over a wireless network 118. Wireless-enabled laptops 120 and 122, cellphones 124 and 126 and PDAs 128 and 130 are referred to as "client devices".

The client devices shown in Figure 1 are just an example and other suitable client devices and groupings of client devices are also possible. A non-exhaustive list of examples for client devices includes work stations, server computers, notebook computers, laptop computers, desktop personal computers (PCs), personal digital assistant (PDA) computers, hand-held computers, wireless local area network (WLAN) stationary units, WLAN add-on cards, WLAN personal computer memory card international association (PCMCIA) cards, WLAN PC cards, WLAN switches, WLAN routers, WLAN servers, game consoles, digital cameras, digital video cameras, television sets, wireless Internet-Protocol (IP) phones and the like.

In this example, AP 102 and the client devices are all "IEEE 802.11-enabled", which means that wireless communications therebetween are in accordance with one or more of the following standards defined by the Institute of Electrical and Electronic Engineers (IEEE) for Wireless LAN MAC and Physical layer (PHY) specifications: IEEE 802.11, IEEE 802.11a, IEEE 802.11b, IEEE 802.11g. However, it will be obvious to those of ordinary skill in the art how to modify the following for other existing WLAN standards or future related standards, including IEEE 802.11n.

The 1999 edition of the IEEE 802.11 standard (as reaffirmed June 12, 2003) distinguishes between infrastructure WLANs and ad-hoc WLANs. The following description is for infrastructure WLANs, involving the use of access points.

The IEEE 802.11 standard explains that access points transmit beacon frames at substantially regular time periods to announce the existence of and to synchronize wireless networks. The number of time units between target beacon transmission times is referred to as a "beacon interval". The format of beacon frames and their contents is explained in detail in the IEEE 802.11 standard. The beacon interval is included in each beacon frame.

Each beacon frame also includes a timestamp which is the value of a clock internal to the access point at the actual transmission time of the beacon. Due to use of carrier sense multiple access/collision detection (CSMA/CD) techniques, the actual transmission time may be later than the target beacon transmission time. Consequently, the timestamp field of the beacon frame is not filled until the actual transmission occurs. A client device receiving the beacon frame will update its internal clock according to the timestamp in the received beacon frame.

Each beacon frame also includes a Traffic Indication Map (TIM) that identifies client devices for which unicast traffic is pending and buffered in the access point. This information is encoded in a partial virtual bitmap. The TIM also includes an indication whether broadcast or multicast traffic is pending.

There are two different TIM types: TIM and delivery TIM (DTIM). A TIM includes a "DTIM count" field that indicates how many beacon frames (including the current frame) appear before the next DTIM. A DTIM count of zero indicates that the current TIM is a DTIM. The "DTIM period" field indicates the number of beacon intervals between successive DTIMs. Every DTIM period, a TIM of type "DTIM" is transmitted within a beacon, rather than an ordinary TIM. After a DTIM, the access point sends out the buffered broadcast or multicast traffic using normal frame transmission rules, before transmitting any unicast frames.

A client device may be in one of two different power states: "Awake" - the client device is fully powered; and "Doze" - the client device is unable to transmit or receive and consumes very low power. The manner in which a client device transitions between these two power states is determined by the power management mode of the client device. In "Active mode", the client device may receive frames at any time and is in the "Awake" state. In "Power Save mode", the client device listens to selected beacon frames (based upon the client device's "Listen Interval" parameter) and sends "Power Save poll (PS-poll)" frames to the access point if the TIM element in the most recent beacon frame indicates buffered unicast traffic for that client device.

In Power Save mode, a client device is in the Doze state and enters the Awake state to receive selected beacons, to receive broadcast and multicast transmissions following certain received beacons, to transmit, and to await responses to transmitted PS-poll frames or (for CF-pollable client devices) to receive contention-free transmissions of buffered traffic.

An access point maintains a Power Management status for each currently associated client device that indicates in which Power Management mode the client device is currently operating. Depending on the Power Management mode of the station, the access point temporarily buffers traffic destined for the client device. The access point transmits buffered unicast traffic to a client device in Power Save mode only in response to a PS-poll from that client device or during the contention-free (CF) period in the case of a CF-pollable client device in Power Save mode.

The "Listen Interval" parameter of a client device specifies the maximum number of beacon intervals that may pass before the client device awakens and listens for the next beacon frame. The client device informs the access point of its "Listen Interval" parameter during the association with the access point. The parameter may be determined, for example, by the desired power consumption/performance target of the client device.

The access point has an aging function to delete buffered traffic when it has been buffered for an excessive period of time. The aging function is based on the "Listen Interval" parameter, so that buffered traffic is retained for a period that is at least as long as a product of the Beacon Interval and the "Listen Interval" parameter of the client device for which the traffic is buffered.

The client device also has a Boolean parameter, entitled "Receive DTIMs", which is set when the client device informs the access point of a change in the power management mode of the client device. When the "Receive DTIMs" parameter is true, the client device awakens to receive all beacon frames that include a DTIM. When the parameter is false, the client device is not required to awaken for every beacon frame that includes a DTIM.

More detail about the power-management operation of the access point and client devices during the contention period and the contention-free period is given in the section of the IEEE 802.11 standard entitled "Power management in an infrastructure network".

Client devices in a wireless network may have conflicting requirements for power consumption and communication throughput when in Power Save mode. Moreover, the need for power saving in a battery-powered client device may increase over time as the battery drains, overriding communication throughput considerations for the battery-powered client device.

Currently, an access point is able to store only a single DTIM period. Consequently, different client devices in Power Save mode will all wake up for the same beacon frames according to the single DTIM period. Currently, a network manager may need to balance the conflicting requirements for power consumption and communication throughput when in Power Save mode of client devices in a wireless network when configuring the DTIM period of an access point.

Currently, a client device that has its "Receive DTIMs" parameter set to true and is in Power Save mode will awaken according to the DTIM period of the access point with which it is associated in order to listen to DTIMs and determine whether to stay awake to receive broadcast or multicast traffic. That same client device will also awaken within a period determined by its "Listen Interval" parameter to listen to TIMs.

Each client device has a unique hardware address, for example a medium access control (MAC) address, and is assigned an Internet Protocol (IP) address by a dynamic host configuration protocol (DHCP) server, which may be embedded in the access point. Alternatively, the IP address of a client device may be statically configured. In addition, an access point assigns an "association identifier (AID)" to client devices associated therewith and maintains a mapping of AIDs to MAC addresses. The access point identifies those client devices for which it has buffered unicast traffic by setting bits in the TIM's partial virtual bitmap that correspond to the appropriate AIDs. Moreover, the access point maintains an Address Resolution Protocol (ARP) table that contains a mapping of Internet Protocol (IP) addresses to MAC addresses.

A network gateway may receive from an external network one or more information frames to forward to a network device associated with a particular IP address. The network gateway may have to resolve the MAC address of the network device associated with the particular IP address in order to include the MAC address in the information frames and to send the information frames to the network device. The network gateway may generate an ARP request and send it to the various network devices, including the access point, which will treat it as broadcast traffic. The network device (or client device associated with the access point) having the particular IP address may respond to the ARP request with its MAC address.

According to an embodiment of the invention, AP 102 may be able to transmit DTIMs at different periods of beacon frames for different wireless client devices associated with AP 102. In other words, AP 102 may be able to maintain independent DTIM periods on a per wireless client device basis. A higher DTIM period may increase the potential savings in power consumption but may potentially reduce the communication throughput, and vice versa.

AP 102 may store one-to-one or one-to-many mappings of indications of different DTIM periods with AIDs of the client devices. For example, AP 102 may store the following mapping of DTIM periods and AIDs:

| **DTIM Period** | **AID** |
|---|---|
| 8 | 1 (cellphone 126) |
| 3 | 2 (PDA 130) |
| 8 | 3 (PDA 128) |
| 2 | 4 (laptop 122) |
| 16 | 5 (cellphone 124) |
| 1 | 6 (laptop 120) |

A client device in Power Save mode and having its "Receive DTIMs" parameter set to true will awaken from Power Save mode to listen to beacons at a period of beacon frames determined by the client device's DTIM period. As shown in the example above, different client devices associated with AP 102 may have different DTIM periods, and therefore a processor of AP 102 is able to transmit DTIMs at different DTIM periods for different client devices.

In the event that AP 102 has buffered broadcast data or buffered multicast data destined for some of the client devices that are in Power Save mode, AP 102 is to ensure that each of the client devices in Power Save mode has had an opportunity to listen to a DTIM indicating the presence of the buffered data.

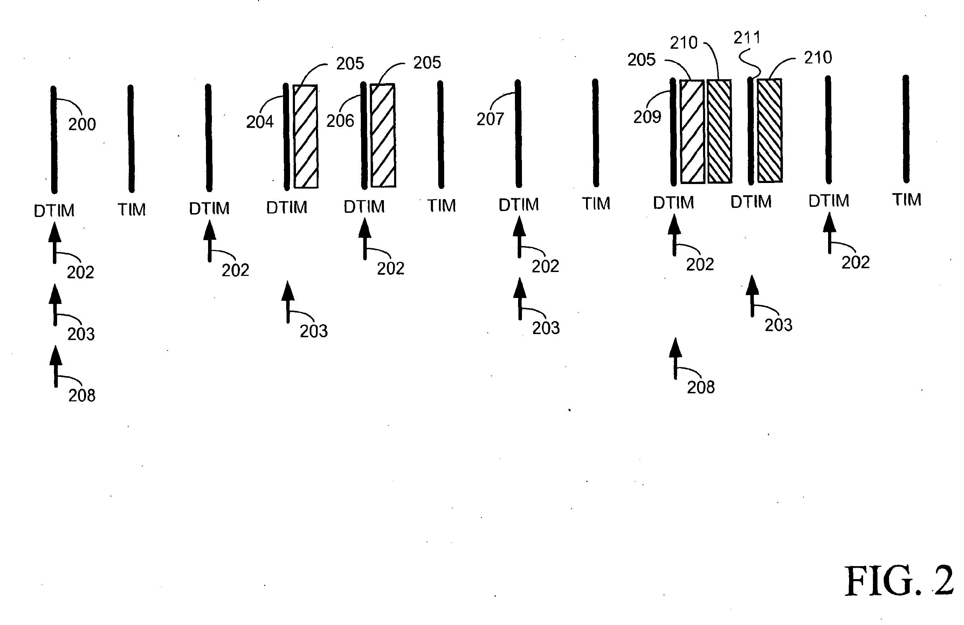

Figure 2 is an illustration of an exemplary sequence of beacon frames transmitted by AP 102, according to some embodiments of the invention. Each beacon frame 200 includes a TIM, and in certain beacon frames, the TIM is a DTIM. For example, laptop 122, cellphone 126 and PDAs 128 and 130 may be in Power Save mode, with DTIM periods of 2, 8, 8 and 3, respectively. Laptop 122 will awaken from Power Save mode to listen to DTIMs in every other beacon frame, as indicated by arrows 202. Similarly, PDA 130 will awaken from Power Save mode to listen to DTIMs in every third beacon frame, as indicated by arrows 203. Similarly, cellphone 126 and PDA 128 will awaken from Power Save mode to listen to DTIMs in every eighth beacon frame, as indicated by arrows 208.

For example, if AP 102 receives an ARP request 205 prior to beacon frame 204, then since at least one of the client devices associated with AP 102 is in Power Save mode, AP 102 will buffer the ARP request.

AP 102 will include in the DTIM of beacon frame 204 an indication that broadcast data is buffered, and will transmit ARP request 205 following beacon frame 204. PDA 130 will awaken to listen to the DTIM of beacon frame 204, will identify that broadcast data is buffered, and will remain awake to receive ARP request 205 following beacon frame 204. Laptop 120, which is in the Awake state, will listen to the DTIM of beacon frame 204, will identify that broadcast is buffered, and will receive ARP request 205 following beacon frame 204.

AP 102 will also include in the DTIM of beacon frame 206 an indication that broadcast data is buffered, and will transmit ARP request 205 following beacon frame 206. Laptop 122 will awaken to listen to the DTIM of beacon frame 206, will identify that broadcast data is buffered, and will remain awake to receive ARP request 205 following beacon frame 206.

The DTIM of beacon frame 207 will not include an indication that broadcast data is buffered, since it will be listened to only by laptop 122 and PDA 130, both of which have already had an opportunity to listen to a DTIM indicating the presence of ARP request 205.

To continue the example, if AP 102 receives an ARP request 210 prior to beacon frame 209, AP 102 will buffer ARP request 210 for those client devices in Power Save mode, namely laptop 122, cellphone 126 and PDAs 128 and 130.

AP 102 will include in the DTIM of beacon frame 209 an indication that broadcast data is buffered, and will transmit ARP requests 205 and 210 following beacon frame 209. Laptop 122, cellphone 126 and PDA 128 will awaken to listen to the DTIM of beacon frame 209, will identify that broadcast data is buffered, and will remain awake to receive ARP requests 205 and 210 following beacon frame 209.

Since each of the client devices in Power Save mode has had an opportunity to listen to a DTIM indicating the presence of buffered ARP request 205 and to receive ARP request 205 thereafter, AP 102 may discard ARP request 205 after transmitting ARP request 205 following beacon frame 209.

AP 102 will also include in the DTIM of beacon frame 211 an indication that broadcast data is buffered, and will transmit ARP request 210 following beacon frame 211. PDA 130 will awaken to listen to the DTIM of beacon frame 211, will identify that broadcast data is buffered, and will remain awake to receive ARP request 210 following beacon frame 211.

Since each of the client devices in Power Save mode has had an opportunity to listen to a DTIM indicating the presence of buffered ARP request 210 and to receive ARP request 210 thereafter, AP 102 may discard ARP request 210 after transmitting ARP request 210 following beacon frame 211.

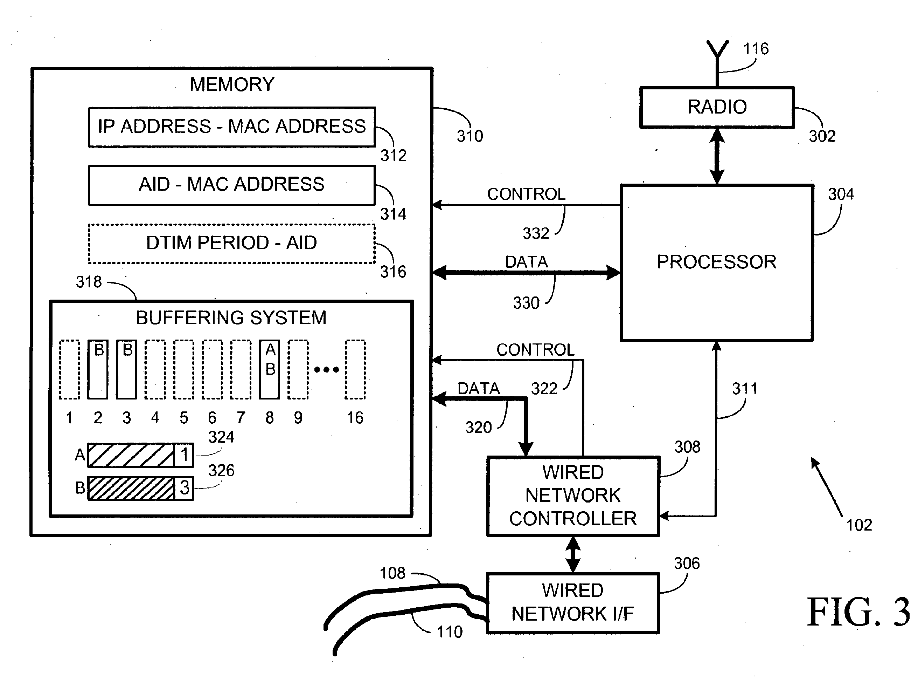

Figure 3 is a block diagram of an exemplary access point, according to some embodiments of the invention. AP 102 includes at least one antenna 116 coupled to a radio 302, which in turn is coupled to a processor 304 having baseband functionality. A non-exhaustive list of examples for processor 304 includes a central processing unit (CPU), a microcontroller, a digital signal processor (DSP), a reduced instruction set computer (RISC), a complex instruction set computer (CISC) and the like. Furthermore, processor 304 may be part of an application specific integrated circuit (ASIC) or may be a part of an application specific standard product (ASSP).

AP 102 also includes a wired network interface 306 coupled to a wired network controller 308. The wired network(s) may be, for example, Ethernet network(s), token rings, Universal Serial Bus (USB), wired network(s) according to the IEEE 1394-1995, IEEE 1394a-2000, and IEEE 1394b standards (commonly known as "FireWire"), or any combination thereof. Wired network interface 306 is able to use wired connections 108 and 110.

Radio 302 and processor 304 may be part of the same integrated circuit or in separate integrated circuits. Similarly, processor 304 and wired network controller 308 may be part of the same integrated circuit or in separate integrated circuits.

AP 102 also includes a memory 310, which may be fixed in or removable from AP 102. Memory 310 may be coupled to processor 304 or partly embedded in processor 304. A non-exhaustive list of examples for memory 310 includes any combination of the following:
a) semiconductor devices such as registers, latches, read only memory (ROM), mask ROM, electrically erasable programmable read only memory devices (EEPROM), flash memory devices, non-volatile random access memory devices (NVRAM), synchronous dynamic random access memory (SDRAM) devices, RAMBUS dynamic random access memory (RDRAM) devices, double data rate (DDR) memory devices, static random access memory (SRAM), universal serial bus (USB) removable memory, and the like;
b) optical devices, such as compact disk read only memory (CD ROM), and the like; and
c) magnetic devices, such as a hard disk, a floppy disk, a magnetic tape, and the like.

Processor 304 and wired network controller 308 may be coupled by signals 311 to coordinate their activities, for example access to memory 310.

Memory 310 may store mappings 312 of MAC addresses of client devices associated with AP 102 to respective IP addresses, and mappings 314 of MAC addresses of client devices associated with AP 102 to respective AIDs. Memory 310 may also store one-to-one or one-to-many mappings 316 of indications of different DTIM periods with AIDs of the client devices. It should be understood that this is merely an example, and that other methods for mapping AIDs, MAC addresses and IP addresses are also possible. Alternatively, any or all of these mappings may be stored internally in processor 304.

Memory 310 may also include a buffering system 318 to store incoming traffic destined for client devices. For example, data 320 of incoming traffic may be transferred to buffering system 318 under control signals 322 of wired network controller 308.

In one embodiment, AP 102 may maintain in buffering system 318 lists for each "active" DTIM period, i.e., for each DTIM period that is currently applicable to one or more client devices in Power Save mode. For example, as AP 102 receives ARP request 205 prior to beacon frame 204 (Figure 2), AP 102 may allocate buffer A to store ARP request 205. AP 102 may set a counter 324 associated with buffer A to the value 3, which is the total number of DTIM periods that are currently "active". For example, figure 3 shows lists maintained for DTIM periods 2, 3 and 8. AP 102 will include a pointer to buffer A (or any other suitable indication of buffer A) in the lists for DTIM periods 2, 3 and 8.

Once the indication of buffered broadcast data has been included in the DTIM of beacon frame 204 (which will be listened to by client devices having a DTIM period of 3) and ARP request 205 has been transmitted following beacon frame 204, the pointer to buffer A is removed from the list for DTIM period 3 and counter 324 is decremented by 1. Once the indication of buffered broadcast data has been included in the DTIM of beacon frame 206 (which will be listened to by client devices having a DTIM period of 2) and ARP request 205 has been transmitted following beacon frame 206, the pointer to buffer A is removed from the list for DTIM period 2 and counter 324 is decremented by 1. Once the indication of buffered broadcast data has been included in the DTIM of beacon frame 209 (which will be listened to by client devices having a DTIM period of 8) and ARP request 205 has been transmitted following beacon frame 209, the pointer to buffer A is removed from the list for DTIM period 8 and counter 324 is decremented by 1. Once counter 324 is zero, AP 102 is free to deallocate buffer A and discard ARP request 205.

Similarly, as AP 102 receives ARP request 210 prior to beacon frame 209, AP 102 may allocate buffer B to store ARP request 210. AP 102 may set a counter 326 associated with buffer B to the value 3. AP 102 will include a pointer to buffer B in the lists for DTIM periods 2, 3 and 8.

Once the indication of buffered broadcast data has been included in the DTIM of beacon frame 209 (which will be listened to by client devices having a DTIM period of 2 and client devices having a DTIM period of 8) and ARP request 210 has been transmitted following beacon frame 209, the pointer to buffer B is removed from the list for DTIM period 2 and from the list for DTIM period 8, and counter 326 is decremented by 2. Once the indication of buffered broadcast data has been included in the DTIM of beacon frame 211 (which will be listened to by client devices having a DTIM period of 3) and ARP request 210 has been transmitted following beacon frame 211, the pointer to buffer B is removed from the list for DTIM period 3 and counter 326 is decremented by 1. Once counter 326 is zero, AP 102 is free to deallocate buffer B and discard ARP request 210.

Figure 3 shows the lists in buffering system 318 in the state after ARP request 210 has been received by AP 102, but before beacon frame 209.

In another embodiment, AP 102 may maintain in buffering system 318 lists for each client device in Power Save mode. Similar to the "list-per-DTIM-period" embodiment above, AP 102 may allocate a buffer upon receipt of broadcast or multicast data and may include a pointer to the allocated buffer (or any other suitable indication of the allocated buffer) in the lists for the client devices in Power Save mode. Each such allocated buffer is associated with a counter that is set to the total number of client devices in Power Save mode that are destined to receive the broadcast or multicast data. Once a DTIM indicating the presence of the buffered data has been included in a beacon frame, and the buffered data has been transmitted following the beacon frame, AP 102 removes the pointer from the lists of client devices that were supposed to awaken to listen to that DTIM and decreases the counter by the number of client devices that were supposed to awaken to listen to that DTIM. Once the counter is zero, AP 102 is free to deallocate the allocated buffer and discard the buffered data.

In any of these embodiments, processor 304 may handle the transmission of DTIMs at different DTIM periods for different wireless client devices by accessing buffering system 318 and the AID - DTIM period mapping through data signals 330 and control signals 332.

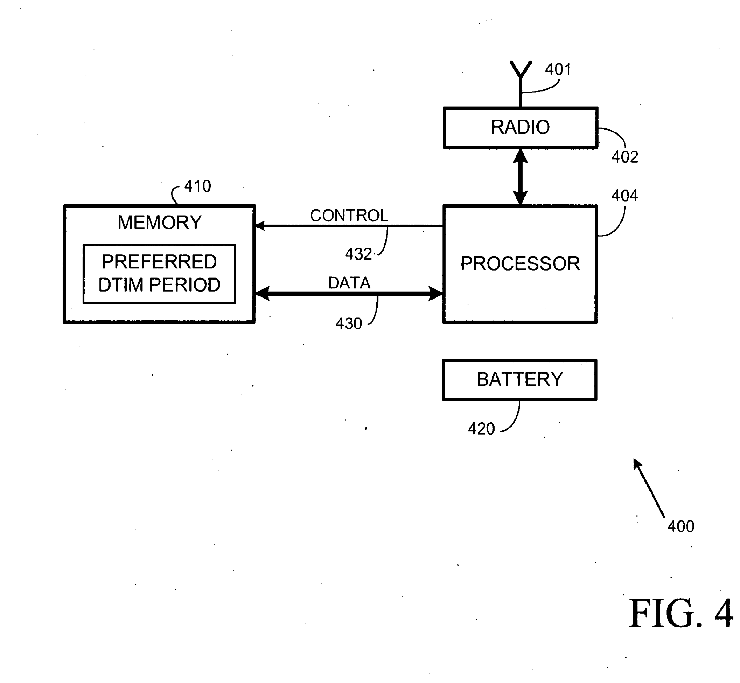

Figure 4 is a block diagram of an exemplary client device, according to some embodiments of the invention. A wireless client device 400 includes at least one antenna 401 coupled to a radio 402, which in turn is coupled to a processor 404 having baseband functionality. A non-exhaustive list of examples for processor 404 includes a central processing unit (CPU), a digital signal processor (DSP), a reduced instruction set computer (RISC), a complex instruction set computer (CISC) and the like. Furthermore, processor 404 may be part of an application specific integrated circuit (ASIC) or may be a part of an application specific standard product (ASSP). Radio 402 and processor 404 may be part of the same integrated circuit in separate integrated circuits.

Client device 400 also includes a memory 410, which may be fixed in or removable from client device 400. Memory 410 may be coupled to processor 404 or partly embedded in processor 404. A non-exhaustive list of examples for memory 410 includes any combination of the following:
a) semiconductor devices such as registers, latches, read only memory (ROM), mask ROM, electrically erasable programmable read only memory devices (EEPROM), flash memory devices, non-volatile random access memory devices (NVRAM), synchronous dynamic random access memory (SDRAM) devices, RAMBUS dynamic random access memory (RDRAM) devices, double data rate (DDR) memory devices, static random access memory (SRAM), universal serial bus (USB) removable memory, and the like;
b) optical devices, such as compact disk read only memory (CD ROM), and the like; and
c) magnetic devices, such as a hard disk, a floppy disk, a magnetic tape, and the like.

Processor 404 may access data stored in memory 410 through data signals 430 and control signals 432. Memory 410 may store an indication of a preferred DTIM period to apply to client device 400 when in Power Save mode. Memory 410 may store a default hard-coded value for the preferred DTIM period. The preferred DTIM period may be configurable by a user of client device 400. Client device 400 may negotiate its DTIM period with AP 102 only once, or may negotiate its DTIM period with AP 102 on the fly as conditions change. For example, processor 404 may adjust the preferred DTIM period of client device 400 according to predefined considerations. A non-exhaustive list of examples for such considerations includes:
a) a charge level of a battery 420 to power the client device (for example, increasing the preferred DTIM period as the charge level drops):
b) an expected usage model for the client device; and
c) network parameters (for example, does the gateway remember the IP address - MAC address mapping after receiving a response to an ARP request?).

Client device 400 is to inform AP 102 of its preferred DTIM period. Alternatively, client 400 is to transmit a request to AP 102, where the request is a request to listen to DTIMs from AP 102 at the preferred DTIM period when in Power Save mode. The request may be generated by processor 404 and transmitted by radio 402. Upon receipt of this request, AP 102 may accept the preferred DTIM period and store the mapping of the preferred DTIM period to the AID of client device 400, or AP 102 may respond with an indication of a different, acceptable DTIM period that client device 400 is to use when in Power Save mode. This latter response may be suitable when AP 102 is unable to support the requested DTIM period due to memory constraints or other limitations.

Once a DTIM period has been negotiated between a client device and an access point, the access point may delay implementation of the newly negotiated period until after the longest already-negotiated DTIM period has passed.

For example, client device 400 may issue a new management frame announcing its preferred DTIM period. In response, AP 102 may respond with a number. If the number is greater than or equal to 0, then the number represents when (in beacon intervals) the new DTIM period will be implemented by AP 102. If the number is negative, that indicates to the client device that AP 102 rejects the proposed DTIM period and the client device will have to send a new request.

In order to support legacy client devices and clients not in Power Save mode, AP 102 may have a default DTIM period, say DTIM period 1, that is transmitted in the "DTIM period" field of the TIM element of each beacon frame. Buffered broadcast or multicast data may be transmitted by AP 102 following a DTIM identifying the presence of such buffered data.

## Claims

1. A method in an access point (102), the method comprising:
transmitting in a beacon signal beacon frames at regular times defined by a beacon interval;
transmitting buffered broadcast and/or multicast data (210) that is destined for two or more wireless client devices (120, 122, 124, 126, 128, 130) that are in a power-save mode and are associated concurrently with said access point (102) following transmission of a beacon frame (204, 209) in said beacon signal that has a IEEE 802.11 delivery traffic indication message, IEEE 802.11 DTIM, to indicate the presence of said buffered data (210); and
maintaining a first IEEE 802.11 DTIM period value for a first group of one or more of said wireless client devices, wherein said beacon frame (204, 209) is transmitted in said beacon signal based on said first IEEE 802.11 DTIM period value;
**characterized in that** the method further comprises:
transmitting said buffered data (210) following transmission of another beacon frame (206, 209, 211) in said beacon signal that has a IEEE 802.11 DTIM to indicate the presence of said buffered data (210); and
maintaining a second IEEE 802.11 DTIM period value for a second group of one or more of said wireless client devices, wherein said other beacon frame (206, 209, 211) is transmitted in said beacon signal based on said second IEEE 802.11 DTIM period value.

2. The method of claim 1, further comprising:
refraining from discarding said buffered data (210) until each of said wireless client devices that is in said power-save mode and for which said buffered data (210) is destined has had an opportunity to listen to a IEEE 802.11 DTIM indicating the presence of said buffered data (210) and has had an opportunity to receive said buffered data (210) transmitted by said access point (102) following said IEEE 802.11 DTIM.

3. The method of claim 1 or claim 2, further comprising:
receiving said first IEEE 802.11 DTIM period value from one or more of said wireless client devices in said first group; and/or
receiving said second IEEE 802.11 DTIM period value from one or more of said wireless client devices in said second group.

4. The method of claim 3, further comprising:
adjusting said received first IEEE 802.11 DTIM period value by said access point (102); and
transmitting said adjusted first IEEE 802.11 DTIM period value to one or more of said wireless client devices in said first group.

5. The method of claim 3, further comprising:
adjusting said received second IEEE 802.11 DTIM period value by said access point (102); and
transmitting said adjusted second IEEE 802.11 DTIM period value to one or more of said wireless client devices in said second group.

6. The method of claim 4, wherein said adjusted first IEEE 802.11 DTIM period value and said second IEEE 802.11 DTIM period value are different values.

7. The method of claim 5, wherein said adjusted second IEEE 802.11 DTIM period value and said first IEEE 802.11 DTIM period value are different values.

8. An access point (102) comprising:
an antenna (116); and
a radio (302) coupled to said antenna (116);
**characterized in that** the access point (102) also comprises:
a processor (304), coupled to said radio (302), which is adapted to implement the method of any one of claims 1 to 7; and
a memory (310) to store said first IEEE 802.11 delivery traffic indication message, IEEE 802.11 DTIM, period value with association identifiers of said first group of one or more of said wireless client devices and to store said second IEEE 802.11 DTIM period value with association identifiers of said second group of one or more of said wireless client devices.

9. The access point of claim 8, wherein said access point (102) is arranged to use an IEEE 802.11 wireless local area network standard.

10. A wireless system (100) comprising:
two or more wireless client devices (120, 122, 124, 126, 128, 130); and
the access point (102) of claim 8 or claim 9.

11. A machine readable medium comprising computer code means executable on the processor (304) of the access point (102) of claim 8 or claim 9 for implementing the method of any one of claims 1 to 7.

## Patentansprüche

1. Verfahren in einem Zugriffspunkt (102), wobei das Verfahren aufweist:
Übertragen von Bakenrahmen in einem Bakensignal regelmäßig, wie durch ein Bakenintervall definiert;
Übertragen von gepufferten Broadcast- und/oder Multicast-Daten (210), die vorgesehen sind für zwei oder mehr drahtlose Client-Vorrichtungen (120, 122, 124, 126, 128, 130), die in einem Energiespar-Modus sind und gleichzeitig zu dem Zugriffspunkt (102) gehören, nachfolgend auf eine Übertragung eines Bakenrahmens (204, 209) in dem Bakensignal, der eine IEEE802.11-Lieferverkehranzeigenachricht, IEEE 802.11 DTIM (delivery traffic indication message), hat, um das Vorhandensein der gepufferten Daten (210) anzuzeigen; und
Führen eines ersten "IEEE 802.11 DTIM"-Periodenwerts für eine erste Gruppe einer oder mehrerer der drahtlosen Client-Vorrichtungen, wobei der Bakenrahmen (204, 209) in dem Bakensignal übertragen wird basierend auf dem ersten "IEEE 802.11 DTIM"-Periodenwert;
**dadurch gekennzeichnet, dass** das Verfahren weiter aufweist:
Übertragen der gepufferten Daten (210) nachfolgend auf eine Übertragung eines anderen Bakenrahmens (206, 209, 211) in dem Bakensignal, der eine IEEE 802.11 DTIM hat, um das Vorhandensein der gepufferten Daten (210) anzuzeigen; und
Führen eines zweiten "IEEE 802.11 DTIM"-Periodenwerts für eine zweite Gruppe einer oder mehrerer der drahtlosen Client-Vorrichtungen, wobei der andere Bakenrahmen (206, 209, 211) in dem Bakensignal übertragen wird basierend auf dem zweiten "IEEE 802.11 DTIM"-Periodenwert.

2. Verfahren gemäß Anspruch 1, das weiter aufweist:
Absehen von einem Verwerfen der gepufferten Daten (210), bis jede der drahtlosen Client-Vorrichtungen, die in dem Energiesparmodus ist und für welche die gepufferten Daten (210) vorgesehen ist, eine Gelegenheit hatte, eine IEEE 802.11 DTIM abzuhören, die das Vorhandensein der gepufferten Daten (210) anzeigt, und eine Gelegenheit hatte, die gepufferten Daten (210) zu empfangen, die durch den Zugriffspunkt (102) übertragen werden nachfolgend auf die IEEE 802.11 DTIM.

3. Verfahren gemäß Anspruch 1 oder Anspruch 2, das weiter aufweist:
Empfangen des ersten "IEEE 802.11 DTIM"-Periodenwerts von einer oder mehreren der drahtlosen Client-Vorrichtungen in der ersten Gruppe; und/oder Empfangen des zweiten "IEEE 802.11 DTIM"-Periodenwerts von einer oder mehreren der drahtlosen Client-Vorrichtungen in der zweiten Gruppe.

4. Verfahren gemäß Anspruch 3, das weiter aufweist:
Anpassen des empfangenen ersten "IEEE 802.11 DTIM"-Periodenwerts durch den Zugriffspunkt (102); und
Übertragen des angepassten ersten "IEEE 802.11 DTIM"-Periodenwerts an eine oder mehrere der drahtlosen Client-Vorrichtungen in der ersten Gruppe.

5. Verfahren gemäß Anspruch 3, das weiter aufweist:
Anpassen des empfangenen zweiten "IEEE 802.11 DTIM"-Periodenwerts durch den Zugriffspunkt (102); und
Übertragen des angepassten zweiten "IEEE 802.11 DTIM"-Periodenwerts an eine oder mehrere der drahtlosen Client-Vorrichtungen in der zweiten Gruppe.

6. Verfahren gemäß Anspruch 4, wobei der angepasste erste "IEEE 802.11 DTIM"-Periodenwert und der zweite "IEEE 802.11 DTIM"-Periodenwert unterschiedliche Werte sind.

7. Verfahren gemäß Anspruch 5, wobei der angepasste zweite "IEEE 802.11 DTIM"-Periodenwert und der erste "IEEE 802.11 DTIM"-Periodenwert unterschiedliche Werte sind.

8. Zugriffspunkt (102), der aufweist:
eine Antenne (116); und
einen Funkteil (302), der mit der Antenne (116) verbunden ist;
**dadurch gekennzeichnet, dass** der Zugriffspunkt (102) auch aufweist:
einen mit dem Funkteil (302) verbundenen Prozessor (304), der ausgebildet ist, das Verfahren gemäß einem der Ansprüche 1 bis 7 zu implementieren; und
einen Speicher (310), um den ersten "IEEE 802.11 DTIM(delivery traffic indication message)"-Periodenwert mit Zugehörigkeits-Identifizierern der ersten Gruppe einer oder mehreren der drahtlosen Client-Vorrichtungen zu speichern und den zweiten "IEEE 802.11 DTIM"-Periodenwert mit Zugehörigkeits-Identifizierern der zweiten Gruppe einer oder mehreren der drahtlosen Client-Vorrichtungen zu speichern.

9. Zugriffspunkt gemäß Anspruch 8, wobei der Zugriffspunkt (102) ausgebildet ist, einen drahtlosen IEEE802.11 lokalen Netzwerk-Standard zu verwenden.

10. Drahtloses System (100), das aufweist:
zwei oder mehr drahtlose Client-Vorrichtungen (120, 122, 124, 126, 128, 130); und
den Zugriffspunkt (102) gemäß Anspruch 8 oder Anspruch 9.

11. Maschinen-lesbares Medium, das Computercodemittel aufweist, die auf dem Prozessor (304) des Zugriffspunkts (102) gemäß Anspruch 8 oder Anspruch 9 ausführbar sind zur Implementierung des Verfahrens gemäß einem der Ansprüche 1 bis 7.

## Revendications

1. Procédé dans un point d'accès (102), le procédé comprenant :
la transmission dans un signal de balise de trames de balise à des instants réguliers définis par un intervalle de balise ;
la transmission de données de diffusion générale et/ou de multidiffusion mises en mémoire tampon (210) qui sont destinées à deux ou plusieurs dispositifs clients sans fil (120, 122, 124, 126, 128, 130) qui sont dans un mode d'économie d'énergie et qui sont associés simultanément audit point d'accès (102) après la transmission d'une trame de balise (204, 209) dans ledit signal de balise qui comporte un message d'identification de trafic de délivrance IEEE 802.11, DTIM IEEE 802.11, pour indiquer la présence desdites données mises en mémoire tampon (210) ; et
le maintien d'une première valeur de période de DTIM IEEE 802.11 pour un premier groupe d'un ou de plusieurs desdits dispositifs clients sans fil, ladite trame de balise (204, 209) étant transmise dans ledit signal de balise en fonction de ladite première valeur de période de DTIM IEEE 802.11 ;
**caractérisé en ce que** le procédé comprend de plus :
la transmission desdites données mises en mémoire tampon (210) après la transmission d'une autre trame de balise (206, 209, 211) dans ledit signal de balise qui comporte un DTIM IEEE 802.11 pour indiquer la présence desdites données mises en mémoire tampon (210) ; et
le maintien d'une deuxième valeur de période de DTIM IEEE 802.11 pour un deuxième groupe d'un ou de plusieurs desdits dispositifs clients sans fil, ladite autre trame de balise (206, 209, 211) étant transmise dans ledit signal de balise en fonction de ladite deuxième valeur de période de DTIM IEEE 802.11.

2. Procédé selon la revendication 1, comprenant de plus :
le fait de ne pas rejeter lesdites données mises en mémoire tampon (210) jusqu'à ce que chacun desdits dispositifs clients sans fil qui est dans ledit mode d'économie d'énergie et auquel lesdites données mises en mémoire tampon (210) sont destinées ait eu une opportunité d'écouter un DTIM IEEE 802.11 indiquant la présence desdites données mises en mémoire tampon (210) et ait eu une opportunité de recevoir lesdites données mises en mémoire tampon (210) transmises par ledit point d'accès (102) après ledit DTIM IEEE 802.11.

3. Procédé selon la revendication 1 ou la revendication 2, comprenant de plus :
la réception de ladite première valeur de période de DTIM IEEE 802.11 à partir de l'un ou de plusieurs desdits dispositifs clients sans fil dans ledit premier groupe ; et/ou
la réception de ladite deuxième valeur de période de DTIM IEEE 802.11 à partir de l'un ou de plusieurs desdits dispositifs clients sans fil dans ledit deuxième groupe.

4. Procédé selon la revendication 3, comprenant de plus :
l'ajustement de ladite première valeur de période de DTIM IEEE 802.11 reçue par ledit point d'accès (102) ; et
la transmission de ladite première valeur de période de DTIM IEEE 802.11 ajustée à l'un ou à plusieurs desdits dispositifs clients sans fil dans ledit premier groupe.

5. Procédé selon la revendication 3, comprenant de plus :
l'ajustement de ladite deuxième valeur de période de DTIM IEEE 802.11 reçue par ledit point d'accès (102) ; et
la transmission de ladite deuxième valeur de période de DTIM IEEE 802.11 ajustée à l'un ou à plusieurs desdits dispositifs clients sans fil dans ledit deuxième groupe.

6. Procédé selon la revendication 4, dans lequel ladite première valeur de période de DTIM IEEE 802.11 ajustée et ladite deuxième valeur de période de DTIM IEEE 802.11 sont des valeurs différentes.

7. Procédé selon la revendication 5, dans lequel ladite deuxième valeur de période de DTIM IEEE 802.11 ajustée et ladite première valeur de période de DTIM IEEE 802.11 sont des valeurs différentes.

8. Point d'accès (102), comprenant :
une antenne (116) ; et
une radio (302) couplée à ladite antenne (116) ;
**caractérisé en ce que** le point d'accès (102) comprend également :
un processeur (304), couplé à ladite radio (302), qui est adapté pour mettre en oeuvre le procédé selon l'une quelconque des revendications 1 à 7 ; et
une mémoire (310) pour mémoriser ladite première valeur de période de message d'indication de trafic de délivrance IEEE 802.11, DTIM IEEE 802.11, avec des identifiants d'association dudit premier groupe d'un ou de plusieurs desdits dispositifs clients sans fil et pour mémoriser ladite deuxième valeur de période de DTIM IEEE 802.11 avec des identifiants d'association dudit deuxième groupe d'un ou de plusieurs desdits dispositifs clients sans fil.

9. Point d'accès selon la revendication 8, dans lequel ledit point d'accès (102) est configuré de façon à utiliser une norme de réseau local sans fil IEEE 802.11.

10. Système sans fil (100), comprenant :
deux ou plusieurs dispositifs clients sans fil (120, 122, 124, 126, 128, 130) ; et
le point d'accès (102) selon la revendication 8 ou la revendication 9.

11. Support lisible par une machine, comprenant des moyens formant code informatique exécutables sur le processeur (304) du point d'accès (102) selon la revendication 8 ou la revendication 9 pour mettre en oeuvre le procédé selon l'une quelconque des revendication 1 à 7.
